# FASCICULE DE BREVET EUROPEEN

(11) **EP 2 180 567 B1**
(45) Date de publication et mention de la délivrance du brevet: **14.02.2018**
(21) Numéro de dépôt: 09290800.3
(22) Date de dépôt: 19.10.2009
(51) Int. Cl.: H02G 3/30, A47B 96/06

(54) **Bras de console antisismique**
Erdbebensicherer Konsolenarm
Earthquake-resistant bracket arm

(30) Priorité: 22.10.2008 FR 0805859
(43) Date de publication de la demande: 28.04.2010
(73) Titulaire: Niedax France, 62400 Béthune (FR)
(72) Inventeur: Loyer, Thierry, 67210 Obernai (FR); Witkowski, Nicolas, 67210 Obernai (FR)
(74) Mandataire: Demulsant, Xavier

(56) Documents cités:
- EP-A- 0 813 280
- AU-A- 7 043 281
- DE-A1- 19 717 956
- FR-A- 747 235
- FR-A- 2 532 792
- US-A- 4 396 125

## Description

L'invention a trait au domaine des chemins de câbles. Plus précisément, l'invention porte sur un bras de console pour le supportage de chemins de câbles, résistant à des contraintes sismiques.

Les chemins de câbles sont des structures permettant de supporter, aussi bien dans une configuration verticale qu'horizontale, notamment des câbles électriques, des câbles téléphoniques, des câbles de fibres optiques, des câbles de réseau informatique ou encore des canalisations.

Un chemin de câble comprend conventionnellement un fond et deux ailes latérales, la section formant en général un U, bien qu'il existe d'autres formes, par exemple en G comme cela est présenté dans le document WO 2007 068 813.

Eventuellement, les chemins de câbles sont équipés d'accessoires, par exemple de colliers enserrant les câbles et les maintenant contre le chemin de câbles, ou encore de séparateurs réalisant dans un même chemin plusieurs compartiments, permettant la séparation physique de câbles de nature différente. Un couvercle est parfois fixé de manière à fermer le chemin de câbles, conférant une certaine protection des câbles par rapport à des corps étrangers, par exemple la poussière.

Les chemins de câbles sont réalisés de manières variées. Principalement, les chemins de câbles sont réalisés à partir de tablettes pleines pliées, de tablettes comportant des ouvertures ou encore à partir de fils organisés en treillis.

Les chemins de câbles se présentent conventionnellement en forme de tronçons, aboutés les uns aux autres. Les tronçons peuvent être coudés. La longueur conventionnelle pour de tels tronçons est d'environ trois mètres. Ainsi, l'assemblage de plusieurs tronçons permet de former un chemin de câbles adapté aux parcours des câbles. L'assemblage est réalisé par exemple au moyen d'une pièce appelée éclisse, se montant à cheval sur deux tronçons de chemin de câbles consécutifs et les maintenant solidaires.

Généralement, les chemins de câbles sont montés au moyen de ce qui est communément appelé console de supportage, servant de support. La console comprend elle-même un bras de console encastré, par exemple au moyen d'une soudure, dans une platine. La platine est fixée sur un pendard, ou toute autre structure de type colonne. Le bras de console se présente généralement sous la forme d'une structure élancée, de section carrée. Afin d'alléger la structure générale et de limiter l'encombrement, les bras de console sont principalement fixés en porte-à-faux. Ainsi, par exemple lorsque le pendard est vertical, le bras de console s'étend horizontalement, et les chemins de câbles peuvent être montés horizontalement dessus.

Les chemins de câbles sont alors fixés sur le bras. A cet effet, le bras est par exemple muni de perçages, dans lesquels est inséré de la visserie, fixée par en dessous, maintenant le tronçon de chemin de câbles contre le bras.

Les principales contraintes subies par les bras de console sont dues à la charge qu'ils supportent. Cette charge provient bien entendu des chemins de câbles et des câbles montés dessus. Elle est donc principalement statique.

L'étude de la résistance à ce type de contraintes relève de la conception des poutres.

Il est connu que dans une configuration poutre encastrée, la quasi-totalité des contraintes est localisée au niveau de l'encastrement. C'est pourquoi, au lieu d'utiliser une poutre de section identique sur toute sa longueur, il est courant d'utiliser une poutre dont la section transversale s'évase d'une extrémité à une autre.

Des exemples de telles poutres sont donnés par exemple dans les documents EP 0 470 296 ou FR 2 850 717, dans lesquels une poutre voit ses faces latérales se raccourcir à mesure que l'on s'éloigne d'une des extrémités.

Il est également connu d'utiliser une poutre dont non seulement les faces latérales se raccourcissent, mais également la surface sur laquelle sont posés les chemins de câbles, de sorte que quelque soit la face que l'on regarde sur ce bras, elle forme un trapèze.

De telles poutres peuvent présenter une section creuse. Un exemple est donné dans le document US 3,212,648.

Par ailleurs, la section peut être ouverte, de sorte qu'elle forme un U comme dans l'exemple du document US 4,396,125. La section ouverte en U offrant une résistance au cisaillement plus faible que la section fermée, les faces latérales comportent des retours, dirigés l'un vers l'autre, l'arête d'un retour étant parallèle au flanc auquel le retour est attaché. Le document de brevet US 4,396,125 décrit un bras de console comportant l'ensemble des caractéristiques du préambule de la revendication 1.

Toutefois, les exemples donnés sont utilisés pour des structures de stockage, telles que des étagères, et se révèlent inadaptés pour les chemins de câbles.

En effet, pour les chemins de câbles, il peut être nécessaire de prendre en compte des charges supplémentaires dynamiques, par exemple afin de concevoir des bras de console résistants à des contraintes sismiques, ce qui se révèle une caractéristique critique dans des installations sensibles telles que les centrales nucléaires. Les structures connues n'offrent pas une résistance suffisante pour de telles applications.

C'est pourquoi dans ce type d'application, les bras de console ont en général une section de dimensions constante.

La présente invention vise notamment à apporter une solution aux divers problèmes mentionnés ci-dessus.

Un premier objet de l'invention est de proposer un bras de console résistant à des contraintes dynamiques telles que des contraintes engendrées lors de tremblements de terre, garantissant la même tenue tant verticalement qu'horizontalement.

Un second objet de l'invention est de proposer un bras de console intégrant un minimum de matière.

Un troisième objet de l'invention est de présenter un bras de console léger par rapport aux bras de console connus.

Un quatrième objet de l'invention est de proposer un bras de console sur lequel peuvent être montés des chemins de câbles avec des moyens classiques pour un homme du métier.

Selon un premier aspect, l'invention propose un bras de console comportant l'ensemble des caractéristiques de la revendication 1. Selon diverses réalisations, le bras présente les caractères suivants, le cas échéant combinés :
- la largeur de la face supérieure mesurée sur une section transversale du profilé est égale à la hauteur des flancs, mesurée sur la même section ;
- la largeur de la face supérieure et la hauteur des flancs sont au plus égales à 80 mm ;
- la largeur de la face supérieure et la hauteur des flancs sont au moins égales à 40 mm.

L'invention se rapporte, selon un deuxième aspect, à une console de supportage comprenant un bras de console tel que présenté ci-dessus, et comprenant une platine apte à être fixée sur un pendard, l'extrémité du bras ayant les plus grandes dimensions étant fixée sur la platine.

Avantageusement, la platine comprend un premier perçage pour recevoir une première branche d'une bride et des moyens pour recevoir la deuxième branche de la bride, ces moyens étant disposés en arc de cercle dont le centre est confondu avec celui du premier perçage.

Dans une mise en oeuvre, les moyens pour recevoir la deuxième branche de la bride comprennent une ouverture en forme d'arc de cercle.

Dans une mise en oeuvre, les moyens pour recevoir la deuxième branche de la bride comprennent des perçages répartis de façon à former un arc.

D'autres objets et avantages de l'invention apparaîtront à la lumière de la description faite ci-après en référence aux dessins annexés dans lesquels :
- la figure 1 est une vue de dessus d'un bras de console pyramidal ;
- la figure 2 est une vue de côté du bras de console de la figure 1 ;
- la figure 3 est une vue de dessous du bras de console de la figure 1 ;
- la figure 4 est une vue de face du bras de console de la figure 1 ;
- la figure 5 est une vue en perspective d'une console comprenant un bras de console de la figure 1 encastré à son extrémité ayant les plus grandes dimensions sur une platine selon un premier mode de réalisation ;
- la figure 6 est une vue de face de la console de la figure 5 ;
- la figure 7 est une vue en perspective d'une console comprenant un bras de console de la figure 1 encastré à son extrémité ayant les plus grandes dimensions sur une platine selon un deuxième mode de réalisation ;
- la figure 8 est une vue de face de la console de la figure 7.

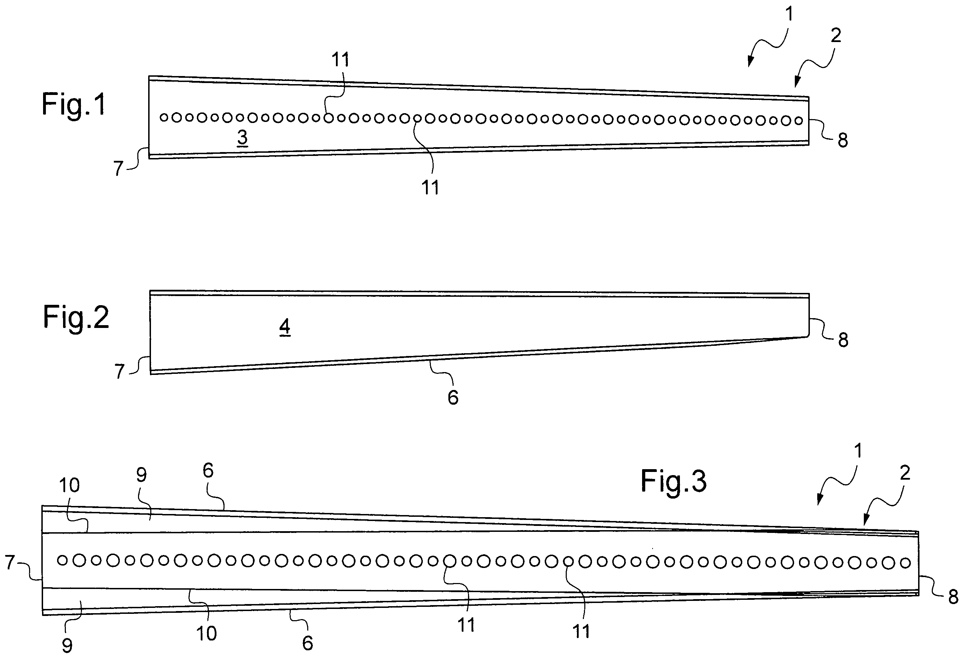

Sur la figure 1 est représenté un bras 1 de console, comprenant un profilé 2 monobloc, c'est-à-dire un profilé formé d'une seule pièce par opposition avec un profilé formé par plusieurs pièces fixées les unes aux autres. Le profilé 2 est typiquement réalisé dans un métal ou un alliage tel qu'un acier, possédant une limite élastique élevée, par exemple de l'ordre de 350 N.mm⁻². Le profilé 2 comporte une face 3 supérieure et deux flancs 4, les flancs 4 s'étendant longitudinalement de part et d'autre de la face 3 supérieure, sensiblement à angle droit, de telle sorte qu'une section 5 transversale du profilé 2 présente une forme en U.

Par longitudinal, on désigne ici la direction d'élancement du profilé 2.

Par transversal, on désigne ici tout plan perpendiculaire à la direction longitudinale.

Dans ce qui suit, la largeur est définie comme étant la dimension de la face 3 supérieure mesurée sur une section 5 transversale entre les deux flancs 4, et la hauteur est définie comme étant la dimension d'un flanc 4 mesurée sur une section 5 transversale entre la face 3 supérieure et l'extrémité 6 longitudinale du flanc.

La face 3 supérieure et les flancs 4 ont une forme de trapèze. En effet, entre les deux extrémités du profilé 2, la largeur de la face 3 supérieure et la hauteur des flancs 4 sont croissantes. Ainsi, le profilé 2 possède une première extrémité 7 de plus grandes dimensions que la deuxième 8.

Avantageusement, cette croissance est linéaire, de sorte que l'aspect général du profilé 2 est celui d'une pyramide à quatre faces, tronquée au sommet.

Par exemple, la largeur de la face 3 supérieure est égale à la hauteur des flancs 4, de sorte qu'une section 5 transversale du profilé 2 est globalement carrée.

Afin d'apporter une plus grande résistance aux contraintes, le profilé 2 comprend, sur chaque flanc 4, un retour 9. Le retour 9 s'étend dans un plan passant par les extrémités 6 longitudinales des deux flancs 4, jusqu'à un bord longitudinal 10. Les deux retours 9 sont alors coplanaires dirigés l'un vers l'autre. La largeur d'un retour 9 mesurée sur une section 5 transversale, est inférieure à la moitié de la largeur de face 3 supérieure mesurée sur la même section 5. Les retours 9 sont obtenus par exemple en pliant les flancs 4 sur leur extrémité 6 longitudinale.

En outre, la distance entre les bords 10 longitudinaux des retours 9 est sensiblement constante sur toute la longueur du profilé 2.

De ce fait, les bords 10 des retours 9 sont parallèles entre eux, et leur largeur diminue avec celle de la face 3 supérieure : les retours 9 sont plus larges sur une section 5 transversale du profilé 2 où la face 3 supérieure est la plus large.

Le tableau ci-dessous indique les déformations, en mm, mesurées sur l'extrémité 8 libre de deux bras de console pyramidaux de longueur 650 mm, en fonction de la force appliquée au centre de la face 3 supérieure, un bras étant sans retour 9 et un bras comprenant des retours 9, ces bras étant encastrés sur leur extrémité 7 ayant les plus grandes dimensions.

**Tableau 1**

| | | | | | | | | | |
|---|---|---|---|---|---|---|---|---|---|
| force appliquée (DaN) | 100 | 200 | 300 | 400 | 500 | 600 | 700 | 800 | 900 |
| sans retour | **1,77** | **3,52** | **5,17** | **7,82** | **11,15** | **14,77** | **19,38** | **26,23** | **39,12** |
| avec retours | **0,58** | **1,17** | **2,48** | **3,80** | **5,92** | **8,00** | **10,65** | **13,74** | **17,41** |

De manière générale, on observe que le bras sans retour 9 subit une déformation environ deux fois supérieure à celle du bras avec retours 9. La forme du bras du console avec les retours 9 tels que décrit permet d'adapter la forme pyramidale à une utilisation dans le domaine des chemins de câbles.

En pratique, le bras 1 de console est fixé perpendiculairement à ce qui est communément appelé un pendard.

Un pendard est une structure de type colonne, par exemple verticale dans le cas où les chemins de câbles sont disposés horizontalement, la colonne pouvant être fixée dans le sol ou sur une paroi.

Les contraintes étant localisées au niveau de l'encastrement, le bras 1 de console est encastré sur son extrémité 7 ayant les plus grandes dimensions.

Le bras 1 ainsi utilisé présente des propriétés mécaniques supérieures à celle des bras connus, pour un gain de matière subséquent.

Dans les tableaux ci-dessous, les bras de console considérés sont réalisés en acier, de masse volumique environ 7,85 g.cm⁻³, et présentent une épaisseur de 2 mm régulière sur une longueur de 650 mm. La largeur est mesurée en extérieur. Deux types de bras de console sont considérés :
- un bras 1 de console pyramidal, tel que décrit ci-dessus, la largeur de la face 3 supérieure et la hauteur des flancs 4 variant de 80 mm sur l'extrémité ayant les plus grandes dimensions à 40 mm sur l'autre extrémité, encastré à son extrémité 7 ayant les plus grandes dimensions, la face supérieure étant munie de perçages répartis longitudinalement,
- un bras de console de section rectangulaire constante sur la longueur, la face supérieure ayant une largeur de 40 mm et les flancs ayant une hauteur de 60 mm, encastré à une de ses extrémités, face supérieure et flancs étant pleins.

Le tableau ci-dessous indique la masse nécessaire pour obtenir, pour les deux types de console, une flèche de même ordre, d'environ 4,5 mm, à leur extrémité libre, pour une force de 10 000 N uniformément répartie sur la face supérieure de chaque bras de console.

**Tableau 2**

| | **masse (kg)** |
|---|---|
| bras section constante | **2,32** |
| bras pyramidal | **1,9** |

Le gain de matière avec le bras 1 de console pyramidal est d'environ 22%.

Le bras 1 de console pyramidal est ainsi avantageusement plus léger, et moins coûteux à produire en termes de consommation de matière, pour des performances supérieures à celle du bras de section constante.

En effet, le tableau ci-dessous compare des performances mécaniques obtenues par simulation numérique entre deux bras de console de masse équivalente (environ 1,90 kg) encastrés à l'une de leurs extrémités, le bras 1 pyramidal étant encastré à son extrémité 7 de plus grande dimension. La force appliquée est une force de 10 000 N uniformément répartie sur la face 3 supérieure, soit une masse d'environ 1 tonne.

**Tableau 3**

| | **Δₘₐₓ (mm)** | **σₘₐₓ (MPa)** | **FSₘᵢₙ** |
|---|---|---|---|
| bras section constante | **8,7** | **570** | **0,36** |
| bras pyramidal | **4,6** | **500** | **0,42** |

La déformation maximale Δₘₐₓ est la déformation mesurée sur l'extrémité libre, c'est-à-dire celle ayant les plus petites dimensions pour le bras pyramidal, des bras.

La contrainte maximale σₘₐₓ est la contrainte relevée au niveau de l'encastrement.

Le facteur de sécurité minimal FSₘᵢₙ est le rapport entre la contrainte limite calculée sur le bras au niveau de l'encastrement, le lieu des contraintes maximales, pour laquelle il y a défaillance (par exemple rupture) et la contrainte maximale effectivement appliquée sur le bras au niveau de l'encastrement. En d'autres termes, le facteur de sécurité permet de quantifier la marge d'erreur qu'un concepteur du bras peut se permettre entre le chargement réel et le chargement limite théorique. Plus il est élevé, plus la marge d'erreur acceptable est élevée.

On voit que la déformation maximale du bras de section constante est d'environ 90% supérieure à celle du bras 1 pyramidal, tandis que la contrainte maximale du bras de section constante est d'environ 15% supérieure à celle du bras 1 pyramidal. Le facteur de sécurité minimal du bras de section constante est d'environ 14% inférieur à celui du bras 1 pyramidal.

On remarquera en outre que les essais comparatifs sont réalisés avec un tube dont la face supérieure et les flancs sont pleins. Un tel tube n'est pas fonctionnel. En effet, afin d'y accrocher un chemin de câbles, le tube devra subir des opérations supplémentaires, telles que des perforations ou le soudage de pâtes de fixation. Ces opérations détérioreront davantage les caractéristiques mécaniques du tube par rapport à celles du bras pyramidal.

Dans le cas du bras 1 pyramidal, la distance entre les flancs 4 sur l'extrémité 8 du profilé 2 ayant les dimensions les plus petites doit rester suffisante pour pouvoir accéder sous la face 3 supérieure et fixer un tronçon de chemin de câbles. De ce fait, les retours 9 réduisant davantage l'accès sous la face 3 supérieure, il peut être difficile de fixer un chemin de câbles sur la face 3 supérieure.

C'est pourquoi, de manière profitable, les retours 9 sont dimensionnés de telle sorte que leur largeur mesurée sur l'extrémité 8 du profilé 2 ayant la plus petite dimension est quasiment nulle. En d'autres termes, la distance entre les bords 10 des retours 9 est supérieure ou égale à la distance entre les flancs 4 mesurée sur l'extrémité 8 ayant les plus petites dimensions. Dès lors, il est possible de passer un outil entre les bords 10 des deux retours 9 pour assurer le serrage d'un chemin de câbles sur toute la longueur du bras 1.

Par ailleurs, les contraintes étant localisées sur l'extrémité 7 ayant les plus grandes dimensions, la perte de résistance sur l'autre extrémité 8 due à l'absence de retours 9 est négligeable.

La longueur d'un bras 1 est par exemple de 650 mm ou de 350 mm. Le bras 1 de 350 mm peut être réalisé en découpant le bras de 650 mm selon une section 5 transversale. Les caractéristiques mécaniques d'un bras de 350 mm obtenu soit en conservant l'extrémité 7 ayant les plus grandes dimensions, soit l'autre extrémité 8 du bras 1 de 650 mm, présentent une différence suffisamment faible pour pouvoir utiliser indifféremment l'une ou l'autre des méthodes.

De manière préférentielle, la hauteur des flancs 4 et la largeur de la face 3 supérieure sont au plus égales à 80 mm et au moins égales à 40 mm, de sorte que la largeur d'un retour 9 au niveau de l'extrémité 7 encastrée est égale à 20 mm, afin d'avoir, sur le bras 1, une surface encastrée de dimensions suffisantes pour résister aux contraintes et une extrémité 8 libre de dimensions suffisantes pour la fixation d'un chemin de câbles. La face 3 supérieure du profilé 2 est munie de perçages 11 répartis longitudinalement, afin de fixer un tronçon de chemin de câbles sur la face 3 supérieure.

Par exemple, un tronçon de chemin de câbles est fixé au moyen d'un accessoire nécessitant de la visserie. Un exemple d'un tel accessoire est donné dans le document EP 1 355 464. L'accessoire comprend une partie venant appuyer sur un tronçon de chemin de câbles pour le maintenir contre la face 3 supérieure d'un bras 1 de console, et cet accessoire comprend une partie insérée dans un perçage 11 du bras 1, cette partie étant munie d'une ouverture coaxiale avec le perçage sur le bras. Dès lors, une vis à tête est insérée dans l'ouverture, la tête venant en appui sur la face 3 supérieure du bras 1, tandis qu'un écrou est associé à la vis pour venir en appui sous la face 3 supérieure du bras 1.

En pratique, la charge statique imposée au bras 1 est de :
- 220 kg pour le bras de 650 mm,
- 112 kg pour le bras de 350 mm.

Ces valeurs prennent en compte le poids propre du bras 1.

Le bras 1 de console ainsi réalisé se révèle résistant à des contraintes sismiques. Le tableau ci-dessous indique quelques valeurs des contraintes de Von Mises, à une température donnée, calculées en fonction de l'épaisseur du bras 1 et du couple d'accélérations horizontale (H) et verticale (V) subi.

Les couples d'accélération ont été déterminés en prenant en compte des emplacements différents des consoles, par exemple des altitudes différentes.

Trois bras 1 de console sont pris en compte :
- bras 1) 350 : bras de longueur 350 mm, réalisé à partir d'une découpe d'un bras de 650 mm en conservant l'extrémité ayant les plus grandes dimensions ;
- bras 2) 350 : bras de longueur 350 mm, réalisé à partir d'une découpe d'un bras de 650 mm en conservant l'extrémité ayant les plus petites dimensions ;
- bras 650 : bras de longueur 650 mm.

**Tableau 4**

| | | couple 1 | | couple 2 | | couple 3 | | couple 4 | | couple 5 | | couple 6 | |
|---|---|---|---|---|---|---|---|---|---|---|---|---|---|
| accélération (m.s⁻²) | | H | V | H | V | H | V | H | V | H | V | H | V |
| | | 9,32 | 13,34 | 11,67 | 14,03 | 14,42 | 14,42 | 20,31 | 15,3 | 28,94 | 18,44 | 47,38 | 18,93 |
| bras 1) 350 | épaisseur (mm) | 2 | | 2 | | 2 | | 2 | | 2 | | 2 | |
| | Von Mises (MPa) | 65 | | 70 | | 75 | | 86 | | 107 | | 137 | |
| bras 2) 350 | épaisseur (mm) | 2 | | 2 | | 2 | | 2 | | 2 | | 2 | |
| | Von Mises (MPa) | 112 | | 120 | | 129 | | 148 | | 182 | | 232 | |
| bras 650 | épaisseur (mm) | 2 | | 2 | | 3 | | 3 | | 3 | | 4 | |
| | Von Mises (MPa) | 222 | | 240 | | 182 | | 208 | | 256 | | 222 | |

Le matériau considéré présente une limité d'élasticité de 355 MPa. En considérant une contrainte limite admissible de 80% par rapport à la limite d'élasticité, soit 266 MPa, on voit que quelque soit la longueur du bras de console et la méthode de réalisation, la contrainte de Von Mises, utilisée comme critère de défaillance, est systématiquement inférieure à la contrainte limite, et ce pour une épaisseur maximale de 4 mm.

Le bras 1 est fixé sur le pendard au moyen d'une platine de console, au niveau de l'extrémité 7 du profilé 2 ayant les plus grandes dimensions. Par exemple, cette extrémité 7 est placée contre la platine 12, puis est soudée sur la platine 12, de sorte que le bras 1 se trouve encastré à son extrémité 7 ayant les plus grandes dimensions. Le bras 1 et la platine 12 constituent ce qui est appelé une console de supportage.

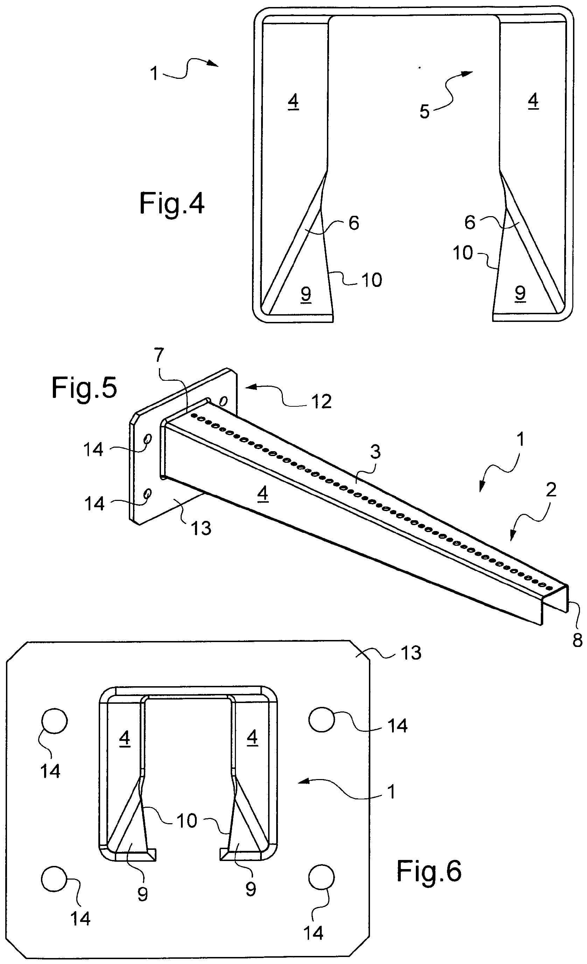

Selon un premier mode de réalisation, la platine 12 se présente sous la forme de deux plaques 13 rectangulaires, munies de perçages 14 aux quatre coins. Dans une région centrale d'une première plaque 13 est encastré le bras 1 de console (figures 5 et 6). La première plaque 13 est alors maintenue sur un pendard en enserrant le pendard entre les deux plaques 13 au moyen de vis insérées dans les perçages 14 et de boulons.

Selon un deuxième mode de réalisation, la platine 12 se présente sous la forme d'une plaque 15 rectangulaire, montée sur le pendard au moyen d'une bride à deux branches, en forme de U. La platine 12 est alors munie d'un premier perçage 16 dans lequel est insérée une première branche de la bride. La platine 12 comprend en outre des moyens 17 disposés en arc de cercle, dont le centre est confondu avec celui du premier perçage 16 et de rayon sensiblement égal à la distance entre les branches de la bride, pour recevoir la deuxième branche de la bride.

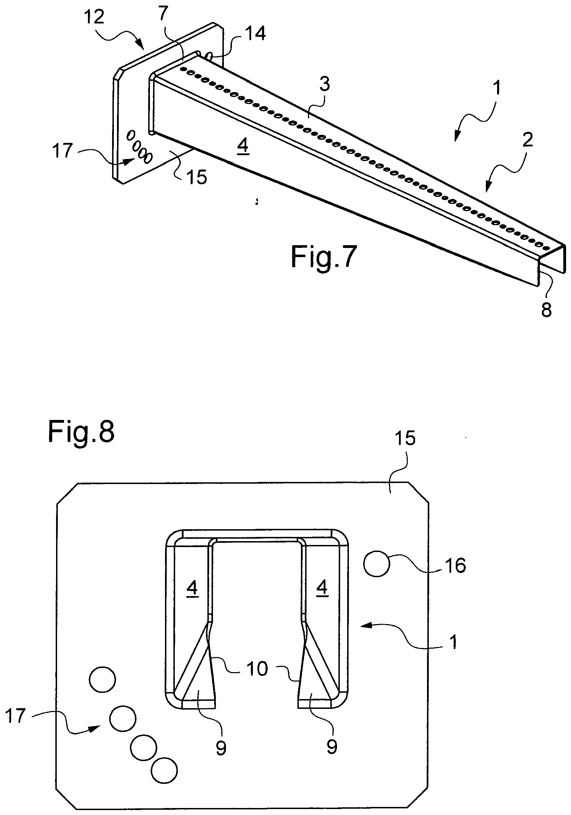

Ces moyens 17 peuvent se présenter sous la forme d'une pluralité de perçages 18, répartis en arc de cercle (figures 7 et 8). Ainsi, la bride vient enserrer le pendard, la première branche de la bride étant insérée dans le premier perçage 16, et la deuxième branche étant insérée dans un des perçages 18 en arc de cercle, de manière à s'adapter à la dimension circonférentielle du pendard. En variante, les moyens 17 pour recevoir la deuxième branche se présentent sous la forme d'une unique ouverture continue en arc de cercle.

La bride est maintenue contre le pendard en fixant ses branches dans la platine, par exemple en serrant des boulons sur les branches contre la plaque 15.

Afin d'accepter des brides de dimensions différentes, les moyens 17 pour recevoir la deuxième branche peuvent être disposés selon plusieurs arcs de cercle dont les rayons correspondent aux distances entre les branches des brides, et dont les centres sont toujours confondus avec celui du premier perçage 16.

Le bras 1 de console est soudé sur la platine 12, dans une région centrale, entre les perçages 14 du premier mode de réalisation ou entre le premier perçage 16 et les moyens 17 pour recevoir la deuxième branche de la bride.

La console de supportage réalisée avec le bras 1 pyramidal tel que décrit permet de combiner gain de matière et résistance à des contraintes sévères, telles que des contraintes sismiques.

Par ailleurs, la forme du bras 1 de console assure un montage des tronçons de chemin de câbles utilisant des moyens classiques.

## Revendications

1. Bras (1) de console pour le supportage de chemins de câbles, comprenant un profilé (2) monobloc, lequel profilé (2) comprend une face (3) supérieure et deux flancs (4) formant une section (5) transversale en U, la largeur de la face (3) supérieure et la hauteur des flancs (4) étant décroissantes à partir d'une extrémité (7) du profilé (2) jusqu'à l'autre extrémité (8), le profilé (2) comportant en outre, sur chacun des deux flancs (4), un retour (9) s'étendant longitudinalement, depuis le bord (6) longitudinal du flanc (4), les deux retours (9) étant coplanaires dans un plan passant par les bords (6) longitudinaux des flancs, étant dirigés l'un vers l'autre et présentant sur une même section (5) transversale une largeur inférieure à la moitié de celle de la face (3) supérieure, **caractérisé en ce que** la distance entre les deux retours (9) est sensiblement constante sur toute la longueur du profilé (2), la largeur des retours (9) étant décroissante à partir de ladite extrémité (7) du profilé (2) jusqu'à ladite autre extrémité (8), de sorte que la largeur des retours (9) mesurée sur ladite autre extrémité (8) du profilé (2) soit nulle, la face (3) supérieure étant munie de perçages (11) répartis régulièrement le long du profilé (2).

2. Bras (1) de console selon la revendication 1, dans lequel la largeur de la face (3) supérieure, mesurée sur une section (5) transversale du profilé (2), est égale à la hauteur des flancs (4) mesurée sur la même section (5).

3. Bras (1) de console selon la revendication 2, dans lequel la largeur de la face (3) supérieure et la hauteur des flancs (4) sont au plus égales à 80 mm.

4. Bras (1) de console selon la revendication 2 ou 3, dans lequel la largeur de la face (3) supérieure et la hauteur des flancs (4) sont au moins égales à 40 mm.

5. Console de supportage comprenant un bras (1) de console selon l'une des revendications 1 à 4, et comprenant une platine (12) apte à être fixée sur un pendard, l'extrémité (7) du bras ayant les plus grandes dimensions étant fixée sur la platine (12).

6. Console de supportage selon la revendication 5, dans laquelle la platine (12) comprend un premier perçage (16) pour recevoir une première branche d'une bride et des moyens (17) pour recevoir la deuxième branche de la bride, ces moyens (17) étant disposés en arc de cercle dont le centre est confondu avec celui du premier perçage (16).

7. Console de supportage selon la revendication 6, dans laquelle les moyens (17) pour recevoir la deuxième branche de la bride comprennent une ouverture en forme d'arc de cercle.

8. Console de supportage selon la revendication 6 ou7, dans laquelle les moyens (17) pour recevoir la deuxième branche de la bride comprennent des perçages répartis de façon à former un arc.

## Patentansprüche

1. Konsolenarm (1) zum Tragen von Kabelschächten, der ein Monoblockprofil (2) umfasst, wobei das Profil (2) eine obere Fläche (3) und zwei Seitenflächen (4), die einen U-förmigen Querschnitt (5) bilden, umfasst, wobei die Breite der oberen Fläche (3) und die Höhe der Seitenflächen (4) ausgehend von einem Ende (7) des Profils (2) bis zu dem anderen Ende (8) abnehmen, wobei das Profil (2) außerdem auf jeder der beiden Seitenflächen (4) einen Rücksprung (9) aufweist, der sich ausgehend von der longitudinalen Kante (6) der Seitenfläche (4) longitudinal erstreckt, wobei die beiden Rücksprünge (9) in einer Ebene, die durch die longitudinalen Kanten (6) der Seitenflächen verläuft, koplanar sind, zueinander orientiert sind und im selben Querschnitt (5) eine Breite aufweisen, die kleiner als die halbe Breite der oberen Fläche (3) ist, **dadurch gekennzeichnet, dass** der Abstand zwischen den beiden Rücksprüngen (9) auf der gesamten Länge des Profils (2) im Wesentlichen konstant ist, wobei die Breite der Rücksprünge (9) ausgehend von dem Ende (7) des Profils (2) bis zu dem anderen Ende (8) abnimmt, derart, dass die Breite der Rücksprünge (9), gemessen an dem anderen Ende (8) des Profils (2), null ist, wobei die obere Fläche (3) mit Durchlochungen (11) versehen ist, die längs des Profils (2) regelmäßig verteilt sind.

2. Konsolenarm (1) nach Anspruch 1, wobei die Breite der oberen Fläche (3), gemessen in einem Querschnitt des Profils (2), gleich der Höhe der Seitenflächen (4), gemessen längs desselben Querschnitts (5), ist.

3. Konsolenarm (1) nach Anspruch 2, wobei die Breite der oberen Fläche (3) und die Höhe der Seitenflächen (4) höchstens gleich 80 mm sind.

4. Konsolenarm (1) nach Anspruch 2 oder 3, wobei die Breite der oberen Fläche (3) und die Höhe der Seitenflächen (4) wenigstens gleich 40 mm sind.

5. Tragkonsole, die einen Konsolenarm (1) nach einem der Ansprüche 1 bis 4 enthält und eine Platine (12) umfasst, die an einer Aufhängeeinrichtung befestigt werden kann, wobei das Ende (7) des Arms, das die größten Abmessungen besitzt, an der Platine (12) befestigt ist.

6. Tragkonsole nach Anspruch 5, wobei die Platine (12) eine erste Durchlochung (16), um einen ersten Schenkel eines Flansches aufzunehmen, und Mittel (17), um den zweiten Schenkel des Flansches aufzunehmen, umfasst, wobei diese Mittel (17) in einem Kreisbogen angeordnet sind, dessen Zentrum mit dem Zentrum der ersten Durchlochung (16) zusammenfällt.

7. Tragkonsole nach Anspruch 6, wobei die Mittel (17) zum Aufnehmen des zweiten Schenkels des Flansches eine kreisbogenförmige Öffnung aufweisen.

8. Tragkonsole nach Anspruch 6 oder 7, wobei die Mittel (17) zum Aufnehmen des zweiten Schenkels des Flansches Durchlochungen aufweisen, die so verteilt sind, dass sie einen Bogen bilden.

## Claims

1. Bracket arm (1) for supporting cable trays, comprising a single-piece section (2), which section (2) comprises a top face (3) and two flanks (4) forming a U-shaped cross section (5), the width of the top face (3) and the height of the flanks (4) decreasing from one end (7) of the section (2) to the other end (8), the section (2) also comprising, on each of the two flanks (4), a return (9) extending longitudinally, from the longitudinal edge (6) of the flank (4), the two returns (9) being coplanar in a plane passing through the longitudinal edges (6) of the flanks, being directed toward one another and having, on one and the same cross section (5), a width less than half of that of the top face (3), **characterized in that** the distance between the two returns (9) is substantially constant over all the length of the section (2), the width of the returns (9) decreasing from said end (7) of the section (2) to said other end (8), such that the width of the returns (9) measured on said other end (8) of the section (2) is nil, the top face (3) being provided with drill-holes (11) distributed evenly along the section (2).

2. Bracket arm (1) according to Claim 1, in which the width of the top face (3), measured over a cross section (5) of the section (2), is equal to the height of the flanks (4) measured on the same section (5).

3. Bracket arm (1) according to Claim 2, in which the width of the top face (3) and the height of the flanks (4) are at most equal to 80 mm.

4. Bracket arm (1) according to Claim 2 or 3, in which the width of the top face (3) and the height of the flanks (4) are at least equal to 40 mm.

5. Supporting bracket comprising a bracket arm (1) according to one of Claims 1 to 4, comprising a plate (12) that can be fixed onto a hanger, the end (7) of the arm having the greatest dimensions being fixed onto the plate (12).

6. Supporting bracket according to Claim 5, in which the plate (12) comprises a first drill-hole (16) for receiving a first branch of a flange and means (17) for receiving the second branch of the flange, these means (17) being arranged in a circular arc whose centre coincides with that of the first drill-hole (16).

7. Supporting bracket according to Claim 6, in which the means (17) for receiving the second branch of the flange comprise an opening in the form of a circular arc.

8. Supporting bracket according to Claim 6 or 7, in which the means (17) for receiving the second branch of the flange comprise drill-holes distributed so as to form an arc.
